# EUROPEAN PATENT APPLICATION

(11) **EP 3 825 930 A1**
(43) Date of publication of application: **26.05.2021**
(21) Application number: 19210373.7
(22) Date of filing: 20.11.2019
(51) Int. Cl.: G06Q 10/06

(54) **METHOD AND SYSTEM FOR MANAGING MANUFACTURING OF PIPE SPOOLS**

(71) Applicant: PipeCloud Oy, 21260 Raisio (FI)
(72) Inventor: Yliaho, Olli, 21420 Lieto (FI); Hyvärinen, Henri, 21270 Nousiainen (FI); Hyvärinen, Kari, 20660 Littoinen (FI); Soinila, Jarno, 20780 Kaarina (FI); Hellman, Otto, 20720 Turku (FI); Kallioniemi, Teemu, 21420 Lieto (FI)
(74) Representative: LEITZINGER OY

(57) **Abstract**

The present disclosure describes a method for managing manufacturing of pipe spools. The present disclosure further describes a system and a software program product implementing the method. The method comprises accessing pipe spool specification data that defines a set of pipe spool specifications, determining components required for manufacturing the pipe spools and classifying the components to predetermined component categories, determining work phase events required for manufacturing the pipe spools based on the classified components and a digital data structure, forming bundles of components or pipe spools based on the required work phase events such that each bundle relates to a specific work phase event and all components or pipe spools in said bundle go through said work phase event, and determining an estimate of a bundle duration for each bundle based on the event durations.

## Description

### FIELD

The invention relates to managing manufacturing processes, and in particular, to managing manufacturing of pipe spools.

### BACKGROUND

Steel pipelines used in the shipbuilding industry, process industry and power plants are typically assembled from pipe spools. A pipe spool is a prefabricated component of a pipeline. A large cruise ship's steel pipelines can comprise between 30000 and 50000 prefabricated spools with a total mass of up to 2000 metric tons, for example.

The prefabricated spools may be produced in specialized pipe shops. They are typically unique pieces of pipeline that are manufactured according to isometric drawings provided by the customer. Since both the pipe spools and their applications, such as cruise ships and power plants, are unique, the prefabrication may be very labour intensive. Machine tools such as bending and cutting equipment are used in manufacturing where possible, but the spool assembly is typically handcrafted.

Because number of pipe spools in an order may be very large, and because each pipe spool may be unique, it may be very difficult to give a reliable estimate of the manufacturing costs. One conventional way to give a price to an order is to estimate the manufacturing costs based on the total weight of the pipe spools in an order. However, this may lead to serious miscalculations in the estimated manufacturing costs. For example, if an order would specify light (in weigh) but complex pipe spools, the conventional way of approximating price would be too low in view of the real manufacturing costs. Further, estimating completion time for the order and managing scheduling of orders may be very complex tasks.

A more refined estimate of manufacturing costs may be formed based on the count of components required for the pipe spools in an order. This is conventionally done by a person or persons manually reviewing pipe spools specifications and counting of the required components. Conventionally the review is done by manually adding tally marks to a pre-printed paper form.

Yet another way for estimating manufacturing costs is based on total length of welding seams required in manufacturing the pipe spools. The total length of the welding seams can be approximated based on the count of the seams and the diameters of the pipes being welded. In this manner, an estimate of the total amount of welding can be formed, and this estimate can be utilized in estimating the manufacturing costs. However, while these pricing schemes can provide more accurate estimate of the manufacturing costs than the weight-based pricing, they still have significant deficiencies. For example, neither of the schemes provides information on manufacturing costs of individual pipe spools. Further, neither of the schemes provides insight on the complexity and optimal scheduling of manufacturing individual pipe spools.

### BRIEF DISCLOSURE

An object of the present disclosure is to provide a method and a system implementing the method so as to alleviate the above disadvantages. The object of the disclosure is achieved by a method, a system and a software program product which are characterized by what is stated in the independent claims. The preferred embodiments of the disclosure are disclosed in the dependent claims.

In the method, the manufacturing process of a pipe spool is divided into work phase events. Each work phase event represents a predefined, clearly definable work phase performed on the pipe spool or its components. These predefined work phases are coupled with target durations. The target durations may be obtained (and updated) based on manufacturer's data on the manufacturing process, for example. In this manner, the total time required for manufacturing a pipe spool can be accurately estimated.

Further, the pipe spools / pipe spool components may be grouped into bundles based on work phase events required for their manufacture. Each bundle may represent one specific work phase event so that all pipe spools/components in the bundle can be go through the same work phase event. The bundles may be formed such that the characteristics of the pipe spools/components are same (or similar), so that the whole bundle can be processed at the same work station (with the same settings). Each bundle may hold a plurality of pipe spools/ pipe spool components originating from different customer orders. In this manner, the manufacturing process can become small-scale mass production. Further, the workload of the employees at the work stations can be managed more easily.

### BRIEF DESCRIPTION OF THE DRAWINGS

In the following the invention will be described in greater detail by means of preferred embodiments with reference to the attached drawings, in which
Figures 1a and 1b show simplified flow diagrams of an embodiment of the method according to the present disclosure;
Figure 2 shows a simplified example of determining the required work phase event;
Figure 3 shows simplified, exemplary diagram of forming bundles.

### DETAILED DISCLOSURE

The present disclosure describes a computer-implemented method and a system for managing manufacturing of pipe spools. In this context, the term "pipe spool" refers to a prefabricated part of a pipeline. The pipe spool is manufactured from raw components, such as pipes and couplings by a manufacturer, such as a pipe shop. The present disclosure also describes a system and a software program product implementing the method.

The method comprises accessing pipe spool specification data defining a set of pipe spool specifications, determining and classifying components required for manufacturing pipe spools defined by the pipe spool specifications, and determining work phase events required for manufacturing the pipe spools based on the classified components and a digital data structure.

In the context of the present disclosure, term "pipe spool specification" refers to specification information that provides instructions for manufacturing a pipe spool. Term "component" refers to a raw component of a pipe spool, or a specific modification of a raw component or components, such as a bend in a pipe or a weld between components. Term "work phase event" refers to a clearly definable work phase performable on a component or components. In the method according to the present disclosure, these work phase events are selected from a predetermined set of work phase event types. The predetermined set of work phase event types is selected such that all relevant work phases are included. In addition to the predetermined event types, the work phase events may be further divided into subcategories based on parameters (e.g. types, variants, dimensions and materials) of the components. As a result, the number of unique work phase events may be counted in hundreds of thousands.

In the method according to the present disclosure, the digital data structure stores, for each component, information identifying the required work phase events. The data structure also provides event durations for each work phase event. In the context of the present disclosure, an event duration represents a measurable time interval of a work phase event from the start of the event to the end of the event. The data structure provides, for all relevant parameter values of each component, the event durations for all work phase events relevant to said variant.

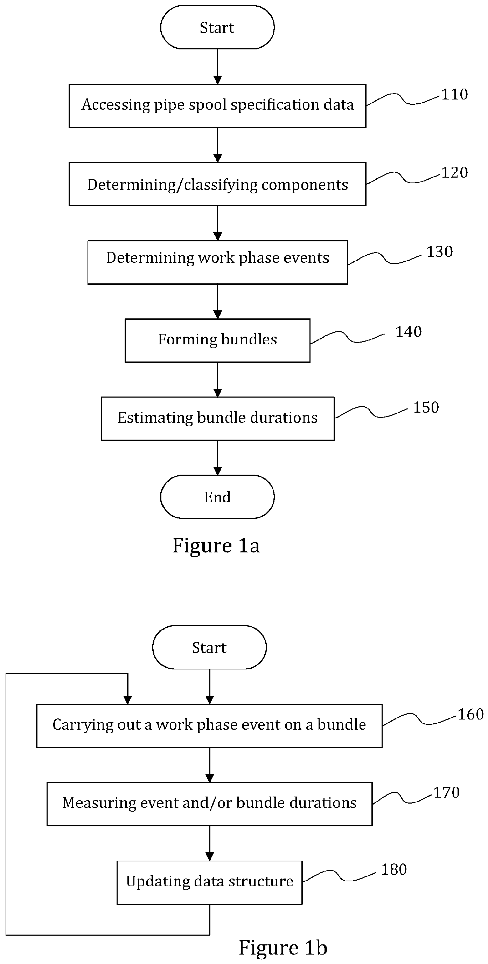

Figures 1a and 1b show simplified flow diagram of an embodiment of the method according to the present disclosure. In Figure 1a, step 110 relates to accessing pipe spool specification data, step 120 relates to the determining and classifying of the components, and step 130 relates to the determining of the work phase events. Once the required work phase events are known, bundles of elements, e.g. bundles of components or bundles of pipe spools, may be formed based on the required work phase events. Each bundle may represent a specific work phase event. Each component and pipe spool may belong to one or more of such bundles. There are different types of bundles. These types include a component bundle and a spool bundle. A component bundle is a collection of one or more components that all require a specific work phase event. The components in a component bundle may relate to the same pipe spool or different pipe spools. The components may even relate to different pipe spools of different projects by different customers. Similarly, a pipe spool bundle is a collection of pipe spools that all require a specific work phase event. The components may relate to the same the same project or to different projects by different customers, for example. The pipe spools in the pipe spool bundles use the components defined in the component bundles.

A bundle duration may be estimated for each component bundle and pipe spool bundle. An estimate of the bundle duration may be determined based on the event durations. In this context, term "bundle duration" refers to a total duration of performing the specific work phase event for all elements (e.g. components or pipe spools) in a bundle. The carrying out of the work phase events for the component and pipe spool bundles may be scheduled or otherwise organised based on the determined bundle durations. In Figure 1a, step 140 relates to the forming of the bundles, and step 150 relates to the determining their durations.

In the following, aspects of the method according to the present disclosure are discussed in more detail.

As shown in step 110 in Figure 1a, a method according to the present disclosure accesses pipe spool specification data. This data may be maintained in a digital data storage. The pipe spool specification data may be obtained as a part of pipe spool of orders from customers, and the pipe spool orders may also be maintained in the digital data storage, for example. Each pipe spool order may comprise at least one specification for at least one pipe spool. Each pipe spool specification may comprise a drawing of the pipe spool. The specification may be in the form of a digital specification, e.g. in the form of a PCF (Piping Component File).

The data storage may be a digital data storage implemented on a computer, for example. It may be in the form of a centralised database, for example. The data storage may be updated as new pipe spool orders are placed and as orders are completed and delivered to the customer. The data storage may hold thousands (or more) orders, and each order may specify even hundreds (or more) pipe spool specifications. The data storage may comprise orders and/or pipe spool specifications from different customers.

In Figure 1a, the next step 120 describes the determining and classifying of the components. A method according to the present disclosure comprises determining components required for manufacturing the pipe spools and classifying them to predetermined component categories. Each component may be classified to a predetermined category. Each predetermined category may represent a specific type of components, for example. In addition, the components may be divided to further categories by dimensions and/or materials of the components, for example. The method may utilise different, project-specific or customer-specific catalogues of predetermined component definitions and categories. For example, different customers may use different standards and may have requirements, and therefore, it may be advantageous to be able to classify the required components based on these standards and requirements.

If a pipe spool specification of the pipe spool is available in digital format (e.g. in the form a PCF and a digital drawing), details of the components required for the manufacture of the pipe spool may be automatically extracted from the digital specification and stored to the digital data storage. The method may comprise extracting information from the PCF and the drawing. For example, structural information of the pipe spool may be extracted from the PCF. In addition, the method may be configured to parse additional information, e.g. information regarding the materials, material treatments etc. from the drawing. Each customer may have their own format for the drawing. Therefore, the method may utilize customer-specific parse profiles that define locations of relevant information in the customer drawing. Alternatively, if no digital version of the pipe spool specification is available, the components may be determined, classified, and inputted to the data storage manually. However, this should be seen only as a secondary approach, since determining, classifying, and inputting the components manually to the data storage may be cumbersome and error prone. In addition to the information extracted from the pipe spool specification, the above-mentioned project-specific or customer-specific catalogues may provide additional information not available in the pipe spool specification.

Once the components for a pipe spool have been identified and classified, work phase events required for manufacturing the pipe spools may be determined. Each work phase event relates to the manufacturing process of a pipe spool and has a measurable duration. A work phase event may be performed on the pipe spool or one or more of its components. Each work phase event can be linked to a component, components and/or a pipe spool in the method according to the present disclosure. Some examples of component-related work phase events are: bending pipes, cutting pipes, and cleaning components. Some examples of spool-related work phase events are: fitting/ assembling components (to form a pipe spool) and surface treating a pipe spool.

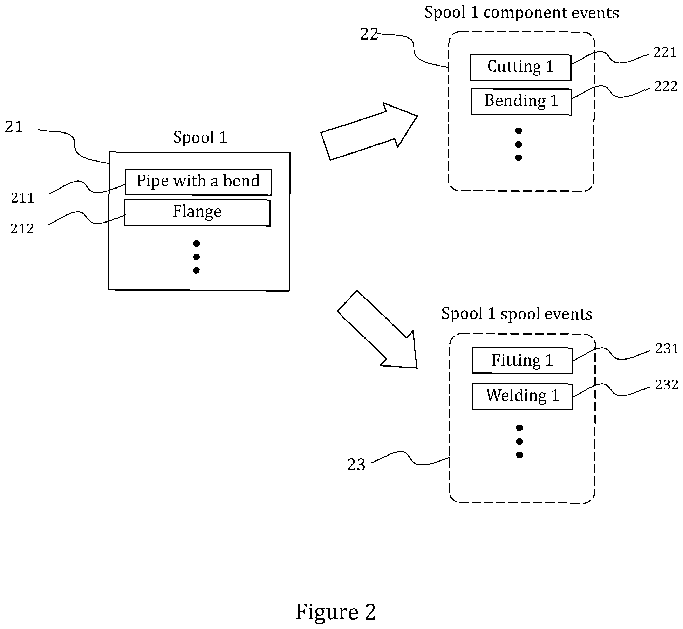

Figure 2 shows a simplified example of determining the required work phase event. In Figure 2, an exemplary spool 21 is made of components, such as a pipe 211 with a bend and a flange 212. The pipe spool may of course have other components instead or in addition to the exemplary components 211 and 212. The components of the pipe spool 21 are mapped into two sets of work phase events. The first set 22 represents component-related work phase events and the second set represents spool-related work phase events. In Figure 2, the first set 22 comprises a work phase event 221 related to cutting of a pipe and a work phase event 222 related to bending a pipe. In the method according to the present disclosure, each pipe spool may generate a plurality of work phase events of different types, including different types of component-related work phase events and spool-related work phase events. In addition, each spool may generate a plurality of work phase events of the same, specific work phase event type. For example, a pipe spool with multiple bends generates multiple work phase events for bending. The second set 23 in comprises work phase events 231 and 232 that are related to pipe spools. In other words, they relate to work phase events that involve components that belong to the same pipe spool. In Figure 2, the second set 23 comprises at least the work phase events of fitting and welding the components. The work phase events (both component-related and spool-related) may also include events not directly related to physically modifying the components. For example, the work phase events may also include logistic work phase events, such as work planning, quality control, packaging, etc.

The required work phase events may be determined based on the classified components and a computer data structure according to the present disclosure. A computer data structure according to the present disclosure defines work phase events required for each component category of the predetermined component categories and event durations for said work phase events. In the context of the present disclosure, an event duration represents a measurable time interval of a work phase event from the start of the event to the end of the event.

In the method according to the present disclosure, the data structure may comprise an event matrix. An event matrix may be a digital collection of linked tables, for example. In one embodiment, an event matrix according to the present disclosure may comprise a table or a set of base values for the event durations, where the base values are represented as a function of the work phase events and the predetermined component categories. In addition, the event matrix may comprise at least one table or set of modifier coefficients for modifying the base values. Each table or set of modifier coefficients comprising modifier coefficient values may be represented as a function of the work phase events and values of a physical characteristic in a predetermined component category. The event matrix may hold hundreds, thousands, or even more base values and modifier coefficients. As a result, the event matrix may be configured to be able to distinguish more than thousand, more than ten thousand, or even more than hundred thousand unique work phase events. The event durations may initially be given default values and these values may then be updated based on measurements of actual, realized event durations.

Because each work phase event relates to a component, components and/or a pipe spool, the component and pipe spool bundles may be formed based on the required work phase events. In the context of the present disclosure, a bundle is a collection of pipe spools or a collection of components of pipe spools for which a certain type of work phase is to be performed. In other words, each bundle may relate to a specific work phase event and all elements in said bundle go through said work phase event. Each pipe spool and component may belong to one or more bundles and each bundle may represent a different work phase event.

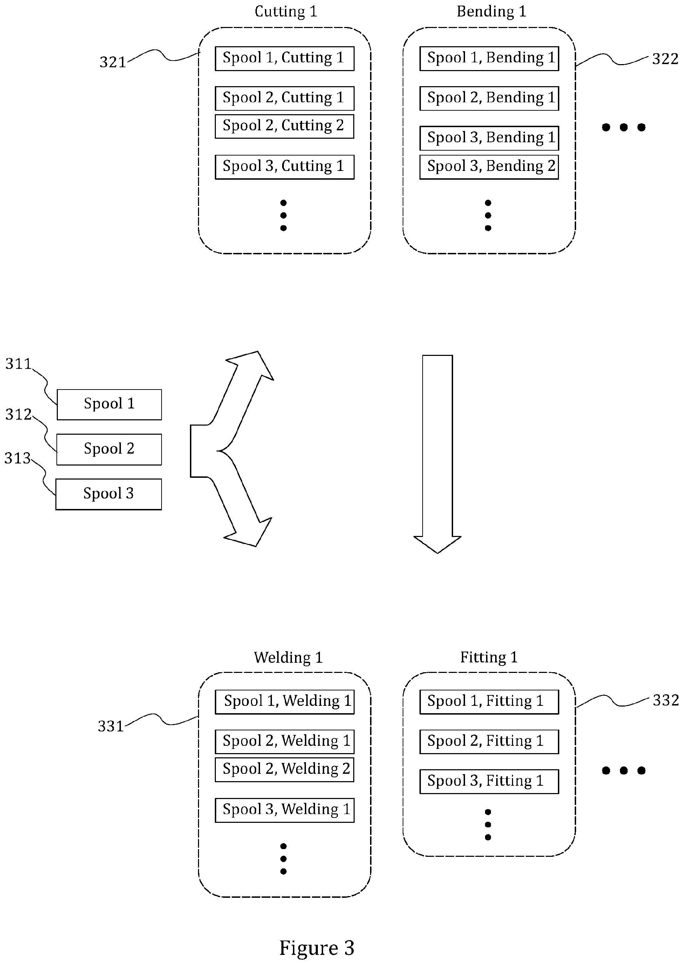

Figure 3 shows simplified, exemplary diagram of forming bundles. In Figure 3, pipe spools 311 to 313 require work phase events in their manufacturing process. Said work phase events relate to cutting, bending, welding, and fitting in Figure 3, and may have been determined as shown in Figure 2, for example.

The work phase events in Figure 3 are grouped into bundles based on the type of the work phase event. At the same time, each of the grouped work phase events relates to a component, components and/or a pipe spool. Thus, each bundle in Figure 3 represents components or pipe spools that share the same or similar work phase event. In practice this can mean a work phase that can be performed at the same workstation with the same settings, for example.

In Figure 3, two component bundles 321 and 322 are shown. The first component bundle 321 relates to cutting and the second component bundle 322 relates to bending. The number and type of the component bundles is not limited to the example of Figure 3. Instead, there may be any number of component bundles in the method according to the present disclosure. Figure 3 also shows two pipe spool bundles 331 and 332. Said bundles relate to welding and fitting, respectively. The number and type of the pipe spool bundles is not limited to the example of Figure 3. Instead, there may be any number of pipe spool bundles in the method according to the present disclosure.

When manufacturing a pipe spool, some work phase events precede other work phase events. In other words, some work phase events may have to be finished before starting some other work phase events. For example, components in the form of sections of pipes may have to be cut and bent before they are weld and fitted into a pipe spool. The method according to the present disclosure keeps track of the sequence (i.e. order, succession) of the required work phase events. The method has knowledge of the sequence of the predetermined work phase events for each of the predetermined component categories. This knowledge may be preprogrammed to the data digital structure, for example. The digital data structure may define rules for the sequence on which the work phase events have to be performed. Further, since work phase events relate to components and/or pipe spools (and vice versa), the method is able to determine relations between components and pipe spools defined in the bundles. In Figure 3, these relations are shown in a simplified manner as an arrow pointing from the component bundles 321 and 322 to the pipe spool bundles 331 and 332.

Because the method according to the present disclosure keeps track of the sequence of the work phase events, the manufacturing process can be controlled in a demand-driven manner. For example, the manufacturing process can be controlled such that each pipe spool bundle sets a demand for components that are bundled into the component bundles. Thus, the method according to the present disclosure may comprise organising the carrying out of the work phase events related to the bundles based on the determined bundle durations and the sequence of the work phase events by using backward scheduling. In this context, term "backward scheduling" refers to a scheduling scheme where due dates for different work phase events of the manufacturing process are placed to a schedule starting from the final work phase event. Any preceding work phase event required for being able to start the final work phase event may then be given due dates that allow the final work phase completed before its due date. In more generic terms, due dates of all work phase events are scheduled such that any work phases required for subsequent work phases will be given due dates that allow the subsequent work phase events to be completed within their due dates. Thus, the method according to the present disclosure may be configured to start from a due date for a final work phase event that completes the manufacturing process of the pipe spool. The method may then determine the sequence of work phase events preceding the final work phase, and give these preceding work phase events due date appropriate due dates so that the determined sequence of work phase events is followed.

Once the bundles have been determined, work orders may then be generated based on the bundles. In this context, a work order represents a specification of a work task to be performed by an employee at a work station. In practice, a component bundle or a pipe spool bundle may act as a work order. The bundles may comprise all relevant information required for performing a specific work phase event for the components/pipe spools in the bundle. This relevant information, such as types, materials and dimensions of the components to be processed can be derived from the details of the components stored in the digital data storage. Once generated, the work orders (e.g. in the form of component or pipe spool bundles) may be sent to work stations /employees which may then perform the given task. In order to increase the clarity of the work orders, it is preferable that the work orders comprise only relevant information. Thus, details of components available in the data storage but not relevant to the task may not be included in the work order.

The event durations may be utilized in scheduling of the work tasks to be performed. For example, bundle durations may be determined based on the event durations provided by the data structure. In the context of the present disclosure, a bundle duration represents an estimated amount of time required for carrying out the work order, i.e. the specified work phase event for the components or pipe spools in a bundle. The bundle duration may be in the form of a time interval, for example. The carrying out of the work orders may then be organised based on the determined bundle durations. The method may be configured to automatically organise the determined work orders (which may be in the form of the bundles) and place them to a schedule. The method utilise an optimization algorithm that tries to find an optimal placement of the work order in the schedule. The schedule may represent future workload of one or more employees at work stations, for example. Alternatively, the method may provide a user with an interactive view on a graphical user interface. The user may be a person tasked with scheduling of the work orders. For example, the interactive view may show free working capacity of the employees as allocable slots and work orders as items that can be used to reserve these slots. The user may allocate the slots by dragging and dropping the work orders on the interactive view.

Depending on the type of a bundle, its bundle duration may be automatically measured. Different types of bundles may have different levels of measurements. For example, modern welding machines are capable of keeping track of the welding task. They may be provided with a welding plan of a welding task and are able to keep track of the welding task to the level of a single welding seam. Alternatively, a work station may be provided with an interactive display that allows the user to input starting and stopping time of a work task on a bundle. In this manner, a total bundle time may be measured, and this total time may be automatically divided for the individual work phase events of all components/pipe spools in the bundle.

The measured values of the work phase events may be used to update the event matrix. In other words, the method according to the present disclosure may comprise measuring actual event durations and/or actual bundle durations, and updating the definitions of the event durations in the digital data structure based on the measured actual event durations and/or bundle durations. In the exemplary, simplified flow diagram of Figure 1b, step 160 relates to carrying out act required for completing a work phase event on a bundle. The bundle duration is measured in step 170, and the definitions of the event durations in the digital data structure are updated based on the measured actual event durations and/or bundle durations in step 180. The process may be repeatedly performed for each bundle or for selected bundles at predetermined intervals, for example. In addition to being able to monitor the actual durations of induvial work phase events, progress of the whole manufacturing process of a pipe spool (e.g. in the form of stage/percentage of completion) can be tracked based on this information.

With the method according to the present disclosure, a manufacturer can estimate the costs of manufacturing pipe spools much more accurately. In addition, the manufacturer can estimate durations of different work phases more accurately and optimize the scheduling of performing said work phases. In addition, the manufacturer, and even the customer, can be provided with information on the progress of the manufacturing process.

In addition to the computer-implemented method as described above, the present disclosure describes a management system for managing manufacturing of pipe spools. The management system is configured to carry out the method according to the present disclosure. The management system may comprise the computer configured to carry out the method. In this context, a computer is a computing device comprising a processing unit and a memory. The computer may be a desktop computer, a computer server, a virtual server, or even a computing cloud, for example. The digital data storage and the digital data structure may reside in the memory of the computer, and the processing unit may be configured to perform an embodiment of the above-discussed method in order to implement a management system according to the present disclosure. The management system may be configured to be used locally on a desktop computer, for example. Alternatively, the computer system may be implemented on a remote computer system, such as a computer server, and accessed remotely, e.g. via internet.

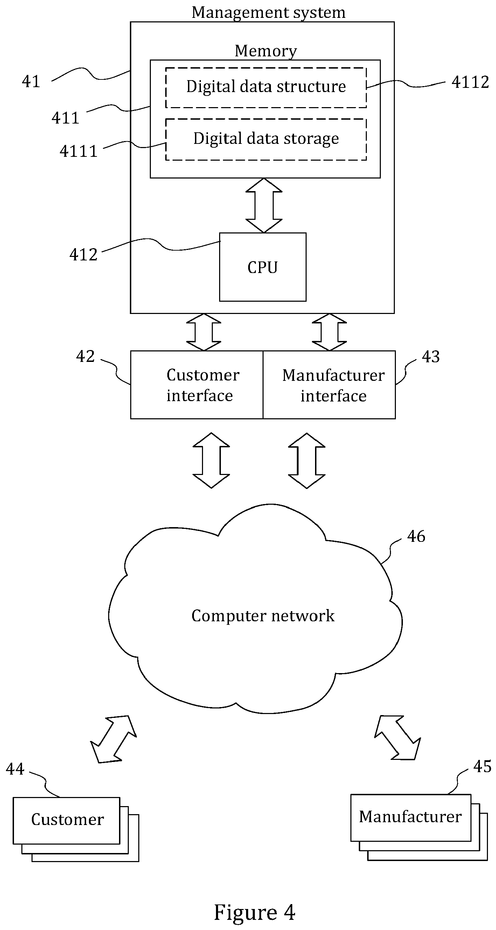

Figure 4 shows a simplified, exemplary embodiment of a management system according to the present disclosure. In Figure 4, a computer 41 comprises a memory 411 and a CPU (central processing unit) 412. The digital data structure 4111 and the digital data storage 4412 are located in the memory 412.The present disclosure further discloses a software program product for managing manufacturing of pipe spools. A software program product may be formed such that, when executed on a computer, the software program product carries out the method according to the present disclosure.

The above-discussed method and system may be a part of a larger system. This larger system may further comprise a manufacturer interface and/or a customer interface, for example. These interfaces may be in the form of web portals, for example. In Figure 4, the management system 41 provides a customer interface 42 and a manufacturer interface 43 which may accessible to customers 44 and manufacturers 45 via a computer network 46, e.g. Internet. The interfaces 42 and 43 may implement web portals which the users (customers and manufacturers) can access with web browsers, for example.

By using the manufacturer interface, a manufacturer can manage its workload and administer project/customer-specific requirements and component catalogues. The manufacturer is also able to monitor that set targets for event durations and bundle durations are met and, when necessary, take actions to correct deviations. The manufacturer interface may also be configured to enable project-specific pricing schemes, ranging from spool weight -based pricing to fine-tuned, work phase event -based pricing. Each manufacturer may set their own values to be used in determining the pricing and the scheduling (including manufacturer-specific event matrices). A customer interface according to the present disclosure may also utilize the event duration information provided by a management system according to the present disclosure. Through the customer interface, manufacturers can provide more accurate pricing schemes to customers. The customers can also get an accurate estimate of the progress of manufacturing of their orders. The customer interface can also be used to provide a view on capacities of different manufacturers (e.g. pipe shops) for starting new orders. These capacities may represent partial capacities allocated to customers by the manufacturers.

The customer and manufacturer interface may be provided as Saas (Software as a service) applications by a service provider, for example. The service provider may maintain a management system according to the present disclosure and provide web portals for the customer and the manufacturer. The web portals may have modules that may be activated or deactivated according to the needs of the customer and the manufacturer.

It is clear to a person skilled in the art that the method, system and software according to the present disclosure can be implemented in various ways. The invention and its embodiments are not limited to the examples described above but may vary within the scope of the claims.

## Claims

1. A method of managing manufacturing of pipe spools, wherein the method comprises
- accessing pipe spool specification data that defines a set of pipe spool specifications, wherein each pipe spool specification defines instructions for manufacturing a pipe spool,
- determining components required for manufacturing the pipe spools and classifying the components to predetermined component categories,
- determining work phase events required for manufacturing the pipe spools based on the classified components and a digital data structure, wherein the digital data structure defines
- work phase events required for the predetermined component categories and
- event durations for said work phase events,
- forming bundles of components or pipe spools based on the required work phase events such that each bundle relates to a specific work phase event and all components or pipe spools in said bundle go through said work phase event, and
- determining an estimate of a bundle duration for each bundle based on the event durations.

2. A method according to claim 1, wherein the method further comprises
- organising the carrying out of the work phase events related to the bundles based on the determined bundle durations.

3. A method according to claim 1 or 2, wherein the method further comprises
- measuring at least one of actual event durations and/or bundle durations, and
- updating the definitions of the event durations in the digital data structure based on the measured actual event durations and/or bundle durations.

4. A method according to any one of the preceding claims, wherein the digital data structure defines rules for the sequence in which the work phase events have to be performed.

5. A method according to claim 4, wherein the method comprises
- organising the carrying out of the work phase events related to the bundles based on the determined bundle durations and the sequence of the work phase events by using backward scheduling.

6. A method according to any one of the preceding claims, wherein the data structure comprises an event matrix, wherein
- the event matrix comprises a set of base values for the event durations, the base values being represented as a function of the work phase events and the predetermined component categories, and
- at least one set of modifier coefficients for modifying the base values, each set of modifier coefficients comprising modifier coefficient values represented as a function of the work phase events and values of a physical characteristic in a predetermined component category.

7. A management system for optimizing manufacturing of pipe spools, wherein the system is configured to carry out the method according to claim 1.

8. A software program product for managing manufacturing of pipe spools, wherein, when executed on a computer, the software program product carries out the method according to claim 1.
